# EUROPEAN PATENT APPLICATION

(11) **EP 4 715 606 A1**
(43) Date of publication of application: **25.03.2026**
(21) Application number: 25203093.7
(22) Date of filing: 18.09.2025
(51) Int. Cl.: G06F 12/02

(54) **SHORT BLOCK DATA ACCUMULATION TECHNIQUES**

(30) Priority: 18.09.2024 US 202463696136 P; 12.09.2025 US 202519327291
(71) Applicant: Marvell Asia Pte Ltd, Singapore 369522 (SG)
(72) Inventor: Colline, Phillip, Tustin, CA 92782 (US)
(74) Representative: Grünecker Patent- und Rechtsanwälte PartG mbB

(57) **Abstract**

Short block data accumulation techniques with a storage accelerator device may be used to optimize the handling of read requests for data having a size smaller than a block. In one example, a requester (e.g., host) may aggregate requests to read data having a size smaller than a block and send, to a storage accelerator device, a single command (e.g., an NVMe vendor specific command) with information identifying the multiple read requests. The accelerator may then generate the individual block read requests to the SSDs. The storage accelerator may then accumulate the data returned from the storage devices in response to the multiple read requests into a single regular block and send the accumulated data back to the host.

## Description

### Priority Application

This patent application claims priority to and/or receives benefit from U.S. Provisional Application No. 63/696,136, titled, "Short Block Data Accumulator," filed on September 18, 2024. The U.S. Provisional Application is hereby incorporated by reference in its entirety.

### Background

Non-volatile storage refers to memory technologies that retain stored data even when power is removed. Examples of non-volatile storage media include flash memory and other persistent memory types. Non-volatile storage is commonly used in computing systems to store firmware, operating system components, application data, and user-generated content. Unlike volatile memory such as dynamic random-access memory (DRAM), which requires continuous power to maintain data integrity, non-volatile storage provides long-term data retention.

Flash memory, particularly NAND flash, is widely deployed in solid-state drives (SSDs) and embedded systems due to its high density and cost efficiency. NVMe (Non-Volatile Memory Express) is a protocol designed to optimize access to flash storage over PCI Express (PCIe), offering low latency and high throughput. NVMe enables parallel access to multiple storage queues, improving performance in data-intensive applications.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an exemplary computing system in which short block data accumulation may be implemented, according to some embodiments of the disclosure.
FIG. 2 illustrates another exemplary computing system in which short block data accumulation may be implemented, according to some embodiments of the disclosure.
FIG. 3 depicts an example of a command for implementing short block data accumulation, according to some embodiments of the disclosure.
FIGS. 4 and 5 depict flow charts illustrating example methods of performing short block data accumulation, according to some embodiments of the disclosure.
FIG. 6 illustrates an exemplary storage accelerator in which short block data accumulation may be implemented, according to some embodiments of the disclosure.
FIG. 7 illustrates an exemplary solid-state drive (SSD) which may be included in a system implementing short block data accumulation, according to some embodiments of the disclosure.
FIG. 8 illustrates an exemplary computing system, which may represent a host device in which short block data accumulation may be implemented, according to some embodiments of the disclosure.

### Detailed Description

### Overview

Artificial intelligence workloads are becoming an increasingly prevalent class of compute-intensive operations, which may be executed on high core count graphics processing unit (GPU) hosts. When the dataset exceeds available memory capacity, non-volatile storage (e.g., flash storage) may be used to store the data. In such situations, read accesses are issued to retrieve the required data from the non-volatile storage (e.g., using a Non-Volatile Memory Express (NVMe) read command). AI workloads often operate on small data segments, such as 32-byte segments, 128-byte segments, or other small-sized data chunks. However, NVMe devices typically support minimum read sizes of 512 bytes or 4 KB (referred to as a block), which may be significantly larger than the size of the requested data for some workloads. Accordingly, a mismatch may occur between the desired small "short block" I/O requests and the smallest supported sector size formats, which may result in a large number of single-block random reads to drives of which much of the data is unneeded. Accordingly, a system may perform numerous single-block random reads, each accessing a full block, when only a fraction of the data from the block is needed. Additionally, such reads generate additional command processing overhead due to the transmission of smaller Transaction Layer Packets (TLPs) over the PCI Express (PCle) links. The increased number of commands and reduced TLP payload utilization contribute to suboptimal PCIe bandwidth usage and degraded overall system performance.

One way to address the mismatch between the short block I/O requests and standard NVMe block read size is for the host to use scatter gather lists and bit bucketing. In this context, "bit bucketing" refers to the practice of reading an entire storage block and discarding the unwanted portions when only a subset of the block's data is needed. In one such example, the NVMe controller fetches the complete block from the non-volatile storage media and, based on the information in the provided scatter gather list, the NVMe controller may "bit bucket" (e.g., discard) the unused portions and only return the requested data to the requester. However, with this approach, a PCle switch topology may be needed, with each PCle switch layer introducing additional system latency. Additionally, efficiencies may be lost with this approach due to the host's need to formulate and issue one NVMe command for each short block request. Furthermore, the use of short (e.g., 128 byte) TLPs results in a reduction in PCle efficiency.

In accordance with examples described herein, short block data accumulation techniques with a storage accelerator device may be used to optimize the handling of short block I/O requests. In one example, a requester (e.g., host) may aggregate I/O requests to read data having a size smaller than a block (referred to herein as "short block I/O requests") and send, to the storage accelerator device, a single NVMe command with information identifying the multiple short block I/O requests. The accelerator may then generate the individual block read commands to the SSDs. The accelerator device may then accumulate the short block data into a single regular block (e.g., 512 bytes or other standard block size) and send the accumulated data back to the host using a single-block TLP. In one such example, only a single NVMe completion queue entry is used.

Using an accelerator to accumulate the short block data can enable a reduction in the number of commands processed through the system. For example, if a short block request size is 128 bytes and a standard block size is 512 bytes, four short block I/O requests may be encompassed with a single command, resulting in a 4x reduction in the number of commands used to process the short block I/O requests. Additionally, the returned data may be sent via larger TLPs, which increases PCle efficiency and may maximize short block IOs per second (IOPs). Furthermore, using an accelerator device to accumulate short block data may reduce host processor load by using a single command for multiple accumulated short block I/O requests. This approach may also have advantages over the host-managed bit bucketing approach mentioned above by reducing the number of PCle switches needed and eliminating the need for host management of non-embedded scatter gather list data descriptors for each short block read; instead, in some examples, short block data accumulation can enable use of a single embedded physical region page (PRP) entry for multiple short block I/O requests.

### Exemplary computing systems

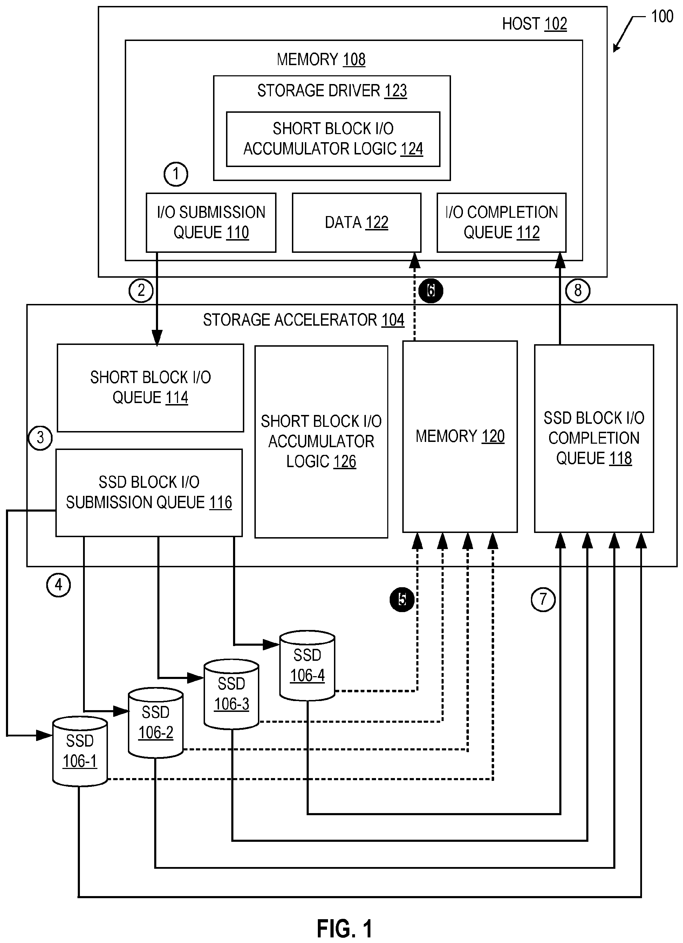

FIG. 1 illustrates an exemplary computing system 100 implementing short block data accumulation. The system 100 includes a host device 102, a storage accelerator 104 coupled with the host device 102, and SSDs 106-1, 106-2, 106-3, and 106-4 coupled with the storage accelerator 104.

The host device 102, which may also be referred to as a requester, is the source of I/O access requests to the SSDs 106-1, 106-2, 106-3, and 106-4. The host device 102 may be a device or system that initiates and/or manages data processing and storage operations. The host device 102 may include one or more processors (not shown in FIG. 1), including one or more central processing units (CPUs), one or more GPUs, one or more digital signal processors, and/or other processors. In some examples, the host device 102 may include a bridge or pass-through device that acts as a source of I/O requests received from other sources. For example, the host device 102 may be a device that receives requests over a network (e.g., NVMe over Fabrics (NVMe-oF) requests) and translates them to PCle requests that are provided to the storage accelerator. In one such example, the host device 102 may provide access to storage devices (e.g., the SSDs 106-1, 106-2, 106-3, and 106-4) over a network fabric rather than being limited to direct PCIe connections. In other examples, the storage accelerator 104 may be implemented as a fabric-enabled storage target in a disaggregated storage system that may receive NVMe-oF requests.

The host device 102 also includes memory 108 and I/O interfaces (not shown in FIG. 1). The memory 108 represents memory resources for use by the host device 102 for storing data that the host device 102 processes and accesses to perform operations. The memory 108 is an example of computer-readable media that may store data 122 and/or instructions. Instructions stored in memory may include instructions of a driver, an operating system, an application, a virtual machine (VM), a tenant, or any other application. In the example illustrated in FIG. 1, the memory stores a storage driver 123, which may include short block accumulator logic 124, as described in more detail below. The memory 108 of the host device 102 may include various types of memory, such as DRAM, non-volatile memory, static random-access memory (SRAM), read-only memory (ROM), electronically erasable programmable ROM (EEPROM), and/or Flash memory. The memory 108 may include local and/or remote memory resources. In order to not clutter the drawing, a single box is shown to represent memory 108; however, the host device 102 may include multiple memories, which may be of different types of memory, store different types of information, and/or may have different access permissions.

The host device 102 includes an I/O submission queue 110 and an I/O completion queue 112 to facilitate the transmission and processing of I/O commands. The I/O submission queue 110 may represent an NVMe I/O submission queue and the I/O completion queue 112 may represent an NVMe I/O completion queue. Although a single I/O submission queue 110 and a single I/O completion queue 112 are shown in FIG. 1, the host device 102 may include multiple I/O submission and I/O completion queues. The I/O submission queue 110 and the I/O completion queue 112 may be buffers (e.g., circular buffers or other buffers) stored in memory 108. The host may utilize the I/O submission queue 110 to stage I/O commands (e.g., read commands and write commands), which are fetched and processed by the storage accelerator 104. Upon completion of these commands, the storage accelerator 104 places the results into an I/O completion queue, allowing the host device 102 to retrieve the status and outcome of the executed commands.

The storage accelerator 104 (which may also be referred to as a storage media accelerator, storage accelerator device, NVMe accelerator, storage interposer, or NVMe interposer) is coupled with and between the host device 102 and the SSDs 106-1, 106-2, 106-3, and 106-4. The storage accelerator 104 appears as a target and controller from the perspective of the host device 102 and appears as the host or requester/initiator from the perspective of the SSDs 106-1, 106-2, 106-3, and 106-4. The storage accelerator 104 includes short block accumulator logic 126 to implement the short block data accumulator techniques described herein. The short block accumulator logic may include hardware, firmware, software, or a combination thereof. The storage accelerator 104 includes a short block I/O queue 114 to stage short block I/O accumulation read commands received from the host device 102, an SSD block I/O submission queue to stage I/O commands to be sent to the SSDs 106-1, 106-2, 106-3, and 106-4, and an SSD block I/O completion queue 118 to stage completions from the SSDs 106-1, 106-2, 106-3, and 106-4, which may be accumulated and sent to the host device 102. The storage accelerator 104 also includes memory 120. The memory 120 is an example of computer-readable media that may store data and/or instructions. The memory 120 may represent one or more of DRAM, SRAM, ROM, EEPROM, and/or Flash memory. Although a single box is shown for the memory 120, the storage accelerator 104 may include multiple memory devices. The memory 120 may store data received from the SSDs 106-1, 106-2, 106-3, and 106-4, which may be accumulated and transferred to the host device 102. The I/O queues 114, 116 and completion queue 118 may be buffers stored in memory (e.g., the memory 120 of the storage accelerator 104 or another memory of the storage accelerator 104). Although FIG. 1 depicts a single short block I/O queue 114, a single SSD block I/O submission queue 116, a single SSD block I/O completion queue, and a single memory 120, the storage accelerator 104 may include multiple instances of I/O queues, completion queues, and/or memory.

As mentioned above, the SSDs 106-1, 106-2, 106-3, and 106-4 are coupled with the host device 102 via the storage accelerator 104. In one example, the SSDs 106-1, 106-2, 106-3, and 106-4 may be considered accelerator-attached SSDs (e.g., due to a physical link between the storage accelerator 104 and the SSDs 106-1, 106-2, 106-3, and 106-4). The SSDs 106-1, 106-2, 106-3, and 106-4 are non-volatile storage devices that utilize integrated circuits to store data persistently. In some examples, the SSDs 106-1, 106-2, 106-3, and 106-4 include flash memory (e.g., NOR Flash or NAND Flash memory) to store data. The SSDs 106-1, 106-2, 106-3, and 106-4 may have various form factors and interface types. In some examples, the SSDs 106-1, 106-2, 106-3, and 106-4 use NVMe as the storage protocol for interfacing with the storage accelerator 104. According to examples, NVMe SSDs are designed to work over PCle connections (e.g., to use the PCle standard as the physical and logical protocol for transmitting data between the storage accelerator 104 and the SSDs 106-1, 106-2, 106-3, and 106-4). Although FIG. 1 depicts an example in which the storage accelerator 104 is coupled with four SSDs, in other examples, a storage accelerator may be coupled with fewer than or more than four SSDs (e.g., two, three, eight, etc.).

Thus, the system 100 of FIG. 1 represents a system with a host device 102, a storage accelerator 104, and SSDs 106-1, 106-2, 106-3, and 106-4, in which short block data accumulation techniques may be implemented. An example of a short block data accumulation method is depicted in FIG. 1, where the numbered white circles represent operations related to I/O requests and the numbered black circles represent operations related to data movement. Solid-line arrows represent I/O request related transmissions (e.g., commands, completions, etc.) and dotted-line arrows represent data transmission. The following description identifies operations corresponding to the numbered circles with the relevant number in parentheses. Operations performed by the host device 102 may be performed with hardware, firmware, and/or software (e.g., short block accumulation logic 124 of the storage driver 123). Similarly, operations performed by the storage accelerator 104 may be performed with hardware, firmware, and/or software (represented by the short block accumulator logic 126, which may include one or more of hardware, firmware, and software).

Referring to FIG. 1, in one example, the host device 102 accumulates short block I/O requests and generates a command (e.g., a vendor specific NVMe command, described in more detail below) that identifies the addresses of the accumulated short block I/O requests (1). In one example, the host device 102 accumulates short block I/O commands that target SSDs coupled with the same accelerator. For example, consider an example in which the host device 102 is coupled with a second storage accelerator in addition to the storage accelerator 104 and where the second storage accelerator is coupled with another four SSDs. In one such example, the host device 102 accumulates short block I/O requests that have addresses (e.g., logical block addresses and drive IDs) that map to the SSDs 106-1, 106-2, 106-3, and 106-4 coupled with only one of the storage accelerators (e.g., the storage accelerator 104) for inclusion in one command. Similarly, the host device 102 may accumulate short block I/O requests that have logical block addresses and drive IDs that map to SSDs of the second storage accelerator for inclusion in another command.

In one such example, the host device 102 may accumulate four short block I/O requests, where a first I/O request targets the SSD 106-1, a second I/O request targets the SSD 106-2, a third I/O request targets the SSD 106-3, and a fourth I/O request targets the SSD 106-4. In other examples, the host device 102 may accumulate short block I/O requests that target only one or a subset of the SSDs 106-1, 106-2, 106-3, and 106-4 coupled with the storage accelerator 104. The number of accumulated short block I/O requests may depend on the implementation, e.g., the number of SSDs that are coupled with, or capable of being coupled with, the storage accelerator 104. Although examples described herein refer to accumulating four short block I/O requests, the accumulation of any number of short block I/O requests greater than 1 may be possible (e.g., two, three, six, eight, sixteen, etc.). In one example, the host device 102 may store the short block I/O requests in the memory 108 (e.g., in a buffer in the memory 108). When the host device 102 accumulates the desired number of short block I/O requests that target the same storage accelerator 104, the host device 102 may generate a short block I/O accumulation command (such as the command 300, discussed below). The short block I/O accumulation command may be stored in the I/O submission queue 110 and provided to the accelerator according to the standard protocol. In one example in which an NVMe protocol is used, the host device 102 rings the doorbell and the storage accelerator 104 pulls the short block I/O accumulation command from the I/O submission queue 110 into its own queue (e.g., the short block I/O queue 114) (2).

In response to receipt of the short block I/O accumulation command, the storage accelerator 104 generates NVMe read commands to the SSDs 106-1, 106-2, 106-3, and 106-4 based on the addresses identified in the command (3). In one such example, the NVMe read commands may be placed or stored in the SSD block I/O submission queue 116. For example, in the case where the host device 102 accumulated four short block I/O requests, the host device may generate a short block I/O accumulation command that includes or otherwise identifies the logical block address (LBAs) for the four I/O requests. In response to receipt of the short block I/O accumulation command, the storage accelerator 104 formulates four standard NVMe read commands (e.g., one NVMe read command formatted to the block size to each of the SSDs 106-1, 106-2, 106-3, and 106-4) and stages them in the SSD block I/O submission queue 116 for transmission to the SSDs 106-1, 106-2, 106-3, and 106-4. In one such example, the storage accelerator 104 uses scatter gather list (SGL) data descriptors in the NVMe read commands to direct the desired data (e.g., the short block data) to a segment in the memory 120 of the storage accelerator 104. In such a way, the desired data may be stored in the memory 120 and the unwanted data may be bit-bucketed.

The storage accelerator 104 may then provide the commands to the SSDs 106-1, 106-2, 106-3, and 106-4 according to the standard protocol. For example, the storage accelerator 104 may ring the doorbell and the SSDs 106-1, 106-2, 106-3, and 106-4 may pull the NVMe read commands into their own command queues (4). Ringing the doorbell in this context may refer to the storage accelerator writing to a specific memory-mapped I/O (MMIO) register (e.g., a doorbell register) to notify one or more of the SSDs 106-1, 106-2, 106-3, and 106-4 that a new command has been placed in the submission queue 116. The SSDs 106-1, 106-2, 106-3, and 106-4 may then process the read commands and transfer the data to the memory 120 (5). For example, after processing the read commands, the short block data may be written into the memory 120 by each of the SSDs 106-1, 106-2, 106-3, and 106-4 at an offset corresponding to the original vendor specific command from operation (1).

Once the storage accelerator 104 detects that all the short block data has been accumulated in the memory 120, the storage accelerator 104 transfers the accumulated data to the host device's memory 108 using the address supplied in the command (6). In one such example, transfer may be performed with a single-block-sized TLP. In addition to accumulating the short block data, the storage accelerator 104 in the example illustrated in FIG. 1 also accumulates the completions from the SSDs 106-1, 106-2, 106-3, and 106-4. For example, upon completion of the read commands, the SSDs 106-1, 106-2, 106-3, and 106-4 send completions to the read commands (7). In the example illustrated in FIG. 1, the completions to the read commands are stored in the SSD block I/O completion queue 118. Once the storage accelerator 104 has received all the completions from the SSDs 106-1, 106-2, 106-3, and 106-4 and transferred the accumulated data to the host device's memory 108, the storage accelerator 104 may send a single completion queue entry (8) to the host device for the command generated in operation (1). The context memory (e.g., memory used to store the accumulated data) may be freed for subsequent commands.

Thus, FIG. 1 illustrates an example of a system in which short block data accumulation may be implemented. As explained in the example above, a single command, such as a vendor specific command that indicates multiple LBAs for short block I/O requests (e.g., two or more short block I/O requests), may be provided to the storage accelerator 104. The accelerator 104 may then generate the separate standard read commands (e.g., to read a standard block-sized portion of data). The accelerator 104 may accumulate the data and completions, transfer the data to the host device 102, and provide a single completion, which may have the benefit of reducing the number of commands processed between the host device 102 and the storage accelerator 104 while also increasing PCle efficiency due to the larger returned data size.

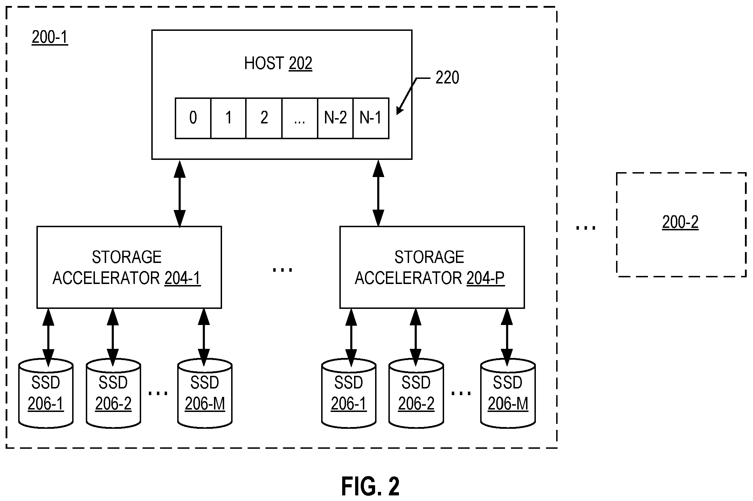

FIG. 2 illustrates another exemplary computing system in which short block data accumulation may be implemented. FIG. 2 illustrates a system 200-1 including a host device 202 and storage accelerators 204-1-204-P (where P is a positive integer greater than 1). The host device 202 may be an example of the host device 102, discussed above. The storage accelerators 204-1-204-P may be examples of the storage accelerators 104, discussed above. Each of the storage accelerators 204-1-204-P are coupled with SSDs 206-1-206-M (of which 206-1, 206-2, and 206-M are shown, and where M is a positive integer greater than 1). The SSDs 206-1-206-M may be examples of the SSDs 106-1-106-4. In some examples, the system may include multiple hosts, each coupled with multiple storage accelerators. For example, FIG. 2 shows that there may be an additional system 200-2, which may be the same as or similar to the system 200-1.

The host device 202 may be coupled with the storage accelerators 204-1-204-P with PCle links. In the example illustrated in FIG. 2, the host device 202 includes N PCle ports 220 (e.g., ports 0 to N-1, where N is a positive integer greater than 1). In one such example, the PCIe ports 220 may be provided with a PCIe switch. In some examples, each of the storage accelerators may be coupled with the host via one of the PCIe ports 220. For example, the storage accelerator 204-1 may be coupled with the host device 202 via the PCIe port 0 and the storage accelerator 204-P may be coupled with the host device 202 via the PCIe port N-1. In another example, each of the storage accelerators 204-1-204-P may be coupled with multiple (e.g., 2) PCle ports 220 of the host device 202. For example, the storage accelerator 204-1 may be coupled with the host device 202 via the PCIe ports 0 and 1 and the storage accelerator 204-P may be coupled with the host device 202 via the PCIe ports N-2 and N-1.

Consider an example in which the system 200-1 includes 16 storage accelerators 204-1-204-P (i.e., P=16), each coupled with one PCIe port of the host device 202, and in which each of the storage accelerators 204-1-204-P is coupled with 4 SSDs (i.e., M=4). In one such example, the system 200-1 has 64 SSDs. In one example, the host accumulates four short block I/O requests into one command, and each of the storage accelerators 204-1-204-P accumulates data at a ratio of 4x1. Thus, a 4x reduction in commands may be achieved with optimized PCIe efficiency due to using full page-sized TLPs.

In another example, the system 200-1 may include 8 storage accelerators 204-1-204-P (i.e., P=8), each coupled with two PCIe port of the host device 202, and in which each of the storage accelerators 204-1-204-P is coupled with 4 SSDs (i.e., M=4). In one such example, the system 200-1 has 32 SSDs. In one such example, the host accumulates eight short block I/O requests into one command, and each of the storage accelerators 204-1-204-P accumulates data at a ratio of 8x1. Thus, an 8x reduction in commands may be achieved with optimized PCIe efficiency due to using full page-sized TLPs. Other systems implementing short block data accumulation may include additional and/or different components than the exemplary systems 100 and 200-1.

### Exemplary commands for short block data accumulation

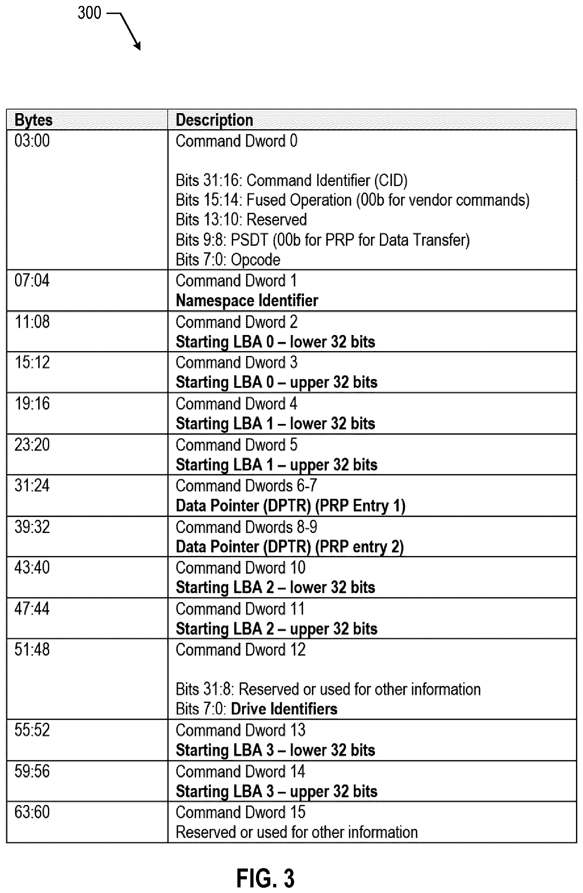

FIG. 3 depicts an example of a command for implementing short block data accumulation. The command 300 is an example of a vendor specific NVMe command to facilitate short block data accumulation read operations. The command 300includes various fields, where each field corresponds to a specific portion of the command's data structure and serves a particular purpose (or in some cases, a field may be reserved). The command 300 illustrates an example of which bytes in the command the various fields may occupy (identified by the "double word (Dword)" of the command). In the example illustrated in FIG. 3,the command 300 includes a command identifier (CID) in bits 31:16 of command Dword 0, a fused operation field in bits 15:14 set to 00b for vendor commands, and a PSDT field in bits 9:8 set to 00b for PRP data transfer. The CID is a field within the command structure that uniquely identifies a specific command issued by the host to the controller (e.g., in the example illustrated in FIG. 1, a command issued from the host device 102 to the storage accelerator 104). The CID enables the host device 102 to track and manage multiple commands, ensuring that responses from the storage accelerator 104 can be correctly matched to the corresponding commands issued by the host device 102. The PSDT field (which stands for "PRP or SGL for Data Transfer") identifies that a PRP data descriptor is used for the data transfer; in other examples, an SGL may be used for data transfer. For vendor specific commands, the opcode field is used to define operations that are not covered by the standard NVMe specification and are specific to the vendor's implementation.

The command 300 also includes a namespace identifier (shown in Dword 1 of the command 300). In the context of an NVMe command, a namespace identifier is a field that specifies the namespace within which the command is to be executed. A namespace in NVMe is a collection of logical blocks that can be independently managed and accessed. Each namespace is identified by a unique identifier, which allows the NVMe controller to distinguish between different namespaces in a given storage device. In the example illustrated in FIG. 3, the same namespace is used for all the drives for all the short block read requests included in the command 300. In other examples, a command may include or otherwise identify different namespace identifiers for different short block read requests. For example, a different namespace identifier may be used for each of the SSDs coupled with the accelerator.

The command 300 also includes a drive identifier for each of the short block read requests (shown in Dword 12 of the command 300). The drive identifier is an identifier that uniquely identifies the target storage device coupled with the accelerator. The size of the field needed for drive identifiers depends on the number of drives that may be coupled with the accelerator. In the example illustrated in FIG. 3, the command 300 may target four drives with four short block read requests; in one such example, if 2 bits are used to identify the drive for each of the short block read requests, then one byte of the command 300 is used for drive identifiers. In one example, the other bits in command Dword 12 may be reserved or used for other information in the command 300. The command 300 also includes a data pointer in Dwords 6-9 (e.g., PRP entry 1 and PRP entry 2) that provide the address to which the accumulated data is to be transmitted. In one example, the accumulated data has a size of a block, and the data pointer is to a block-aligned location in host memory (e.g., in the memory 108 of FIG. 1). The command 300 also includes the starting LBAs for each of the accumulated short block read requests (shown in Dwords 2-3 for the first short block read request, Dwords 4-5 for the second short block read request, Dwords 10-11 for the third short block read request, and Dwords 13-14 for the fourth short block read request).

Thus, FIG. 3 provides an example of a command 300 that may be used to implement short block data accumulation techniques. In other examples, a short block data accumulation command may include one or more pointers to the information for the short block read requests. For example, a short block data accumulation command may include a data pointer field (such as in command Dwords 6-9) that includes a pointer to a list of descriptors with information for the short block read requests. In one such example, the descriptors are fetched from memory in order to determine one or more details (e.g., the LBAs for the short block read requests, one or more addresses to transfer the data to after performing the reads, drive identifiers, and/or other information for the short block read requests). In one such example, using a pointer to information about the short block read requests enables including other information (such as protection information in Dword 12 and/or other information) directly in the command.

Accordingly, a short block data accumulation command, such as the command 300, may include LBA information (e.g., either the actual LBAs embedded in the command or a pointer to a location with the LBAs) to identify the LBAs for the accumulated short block I/O requests from which data is to be read, a drive identifier corresponding to each of the accumulated short block I/O requests (e.g., where the drive identifier identifies one of multiple SSDs coupled with a hardware accelerator), a namespace identifier (e.g., where the namespace identifier identifies logical blocks of a target SSD coupled with the accelerator device), and a pointer to a memory location to transfer accumulated data to. Other commands may include different or additional fields, may include fields in different portions of the commands (e.g., in different Dwords), and may include information directly or indirectly (e.g., with a pointer to a location where the relevant information is stored).

### Exemplary methods for short block data accumulation

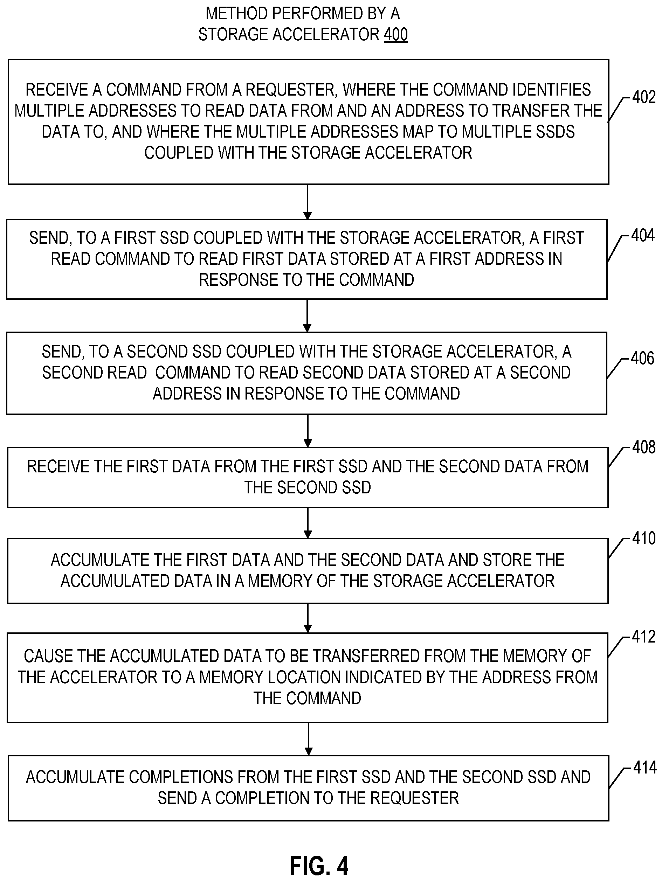

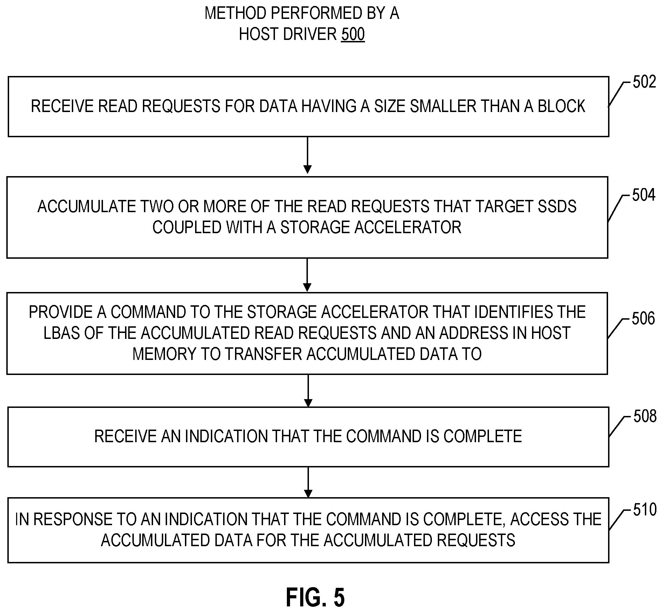

FIGS. 4 and 5 depict flow charts illustrating example methods of performing short block data accumulation. FIG. 4 depicts a flow chart of a method 400 that may be performed by a storage accelerator (such as the storage accelerator 104 of FIG. 1) to implement short block data accumulation techniques. FIG. 5 depicts a flow chart of a method 500 that may be performed by a host device (such as by the storage driver 123 of the host device 102 of FIG. 1) to implement short block data accumulation techniques.

Referring first to FIG. 4, in 402, a storage accelerator receives a command from a requester (such as from the host device 102 of FIG. 1). The command identifies multiple addresses to read data from and an address to transfer the data to. The multiple addresses identified in the command map to one or more SSDs coupled with the storage accelerator. For example, referring to FIG. 3, the command may have a format that is the same as, or similar to, the command 300, and include information identifying the starting LBAs of multiple accumulated short block read requests and an address to transfer accumulated data to.

In 404, the storage accelerator sends, to a first SSD coupled with the storage accelerator, a first read command to read first data stored at a first address in response to the command. For example, referring to FIG. 1, the storage accelerator 104 may send a first read command to the SSD 106-1. The first read command may be a standard block-size NVMe read command with the starting LBA of the first accumulated read request. The first read command may indicate that an SGL is to be used in order to obtain only the desired portion of the block of data and cause the unwanted portion of the block of data to be discarded.

In 406, the storage accelerator sends, to a second SSD coupled with the storage accelerator, a second read command to read second data stored at a second address in response to the command. The second read command may be a standard block-size NVMe read command with the starting LBA of the second accumulated read request. The second read command may indicate that an SGL is to be used in order to obtain only the desired portion of the block of data and cause the unwanted portion of the block of data to be discarded.

In 408, the storage accelerator may receive the first data from the first SSD and the second data from the second SSD. For example, referring to FIG. 1, the SSD 106-1 reads the requested data block from its non-volatile media (e.g., from its NAND flash memory or other non-volatile storage media). In this example, because only part of a block is requested (e.g., a short block, i.e., sub-sector portion smaller than the minimum supported sector size) the SSD 106-1 retrieves the full sector from the storage media and may transfer only the requested portion of the data to the memory locations defined in the SGL. The SGL descriptor includes offset and length information that allows the SSD 106-1 (e.g., the controller of the SSD 106-1) to map the relevant portion of the retrieved data to the appropriate memory segment. The unused portion of the sector may be discarded. In one example, the transfer of the specified data may be performed over a PCIe interface using Direct Memory Access (DMA).

Referring again to FIG. 4, at 410, the storage accelerator accumulates the first data and the second data and stores the accumulated data in a memory of the storage accelerator. For example, referring to FIG. 1, the SSD 106-1 may transfer the requested short block data to the memory 120 at the offset specified by the SGL descriptor in the read command to the SSD 106-1. Similarly, the SSD 106-2 may transfer the specified short block data to the memory 120 at the offset specified by the SGL descriptor in the read command to the SSD 106-2. In one example, the offset is based on the command from the host. For example, consider an implementation in which the block size is 512 B and the host is to accumulate four short block read requests for data having a size of 128 B. Referring to the example command in FIG. 3, the first read request with the starting LBA 0 may be placed at a location in the memory 120 with an offset of 0 and the second read request with the starting LBA 1 may be placed at the location in the memory with an offset of 128. Note that in this example, the numbers '0' and '1' of the starting LBA 0 and LBA 1 are used to identify two different short block I/O requests that were accumulated by the host and identified in a short block data accumulation command and do not imply any specific adjacency or other relationship between the logical block addresses of those commands. The LBA 0 and LBA 1 are dictated by the original short block I/O requests received by the host. Accumulation of the data refers to the storage accelerator's storage of the data in its memory until the data from each of the accumulated read requests is returned from the SSDs (e.g., instead of transferring the data returned for a given read command to the host immediately upon completion of each read command). The accumulated data includes the data provided by the SSDs for each of the read requests specified in the short block I/O accumulation command. For example, referring to FIG. 3, the accumulated data refers to the data returned from four requests (e.g., with starting LBAS 0, 1, 2, and 3).

In 412, the storage accelerator causes the accumulated data to be transferred from the memory of the accelerator to a memory location indicated by the address from the command. The storage accelerator may determine that all accumulated data has been provided by the SSDs when it has received completions from the SSDs for all the read commands identified in the command from the host (e.g., all the accumulated short block read requests). Causing the accumulated data to be transferred to the host device may involve transmitting the data over a PCIe interface between the accelerator 104 and the host device 102 (e.g., using DMA). In one example, the accumulated data has the size of a standard block (e.g., 512 B), and the data received for each of the short block reads has a size that is smaller than or equal to half the block (e.g., 256B or smaller).

In 414, the storage accelerator accumulates completions from the first SSD and the second SSD and sends a completion to the requester once all the completions have been received from the SSDs for all the read commands identified in the command from the host (e.g., all the accumulated short block read requests).

Note that although FIG. 4 is an example that specifically refers to two accumulated short block read requests (e.g., a first read request and a second read request), the method 400 is not limited to the accumulation of two read requests. For example, the method 400 may involve accumulating any number of short block read requests greater than one (e.g., four, eight, sixteen, or another number of requests greater than one).

FIG. 5 depicts a flow chart of a method 500 from the host's perspective. In 502, the host receives read requests for data having a size smaller than a block. For example, if a standard block is 512 B or 4KB, the short block read requests may have a size smaller than the standard block size (e.g., 256 B, 128B, 64B, 32B, etc.). Although examples herein refer to standard block sizes of 512 B and 4KB, other standard block sizes are possible. As mentioned above, Al workloads processed on GPUs may commonly involve read requests to sub-block-sized data. However, the method 500 may apply to short block I/O requests from any type of workload.

In 504, the host accumulates two or more of the read requests that target SSDs coupled with an accelerator. For example, if the host is coupled with multiple storage accelerators (e.g., multiple storage accelerators 104, each coupled with multiple SSDs), the host determines which short block reads map to which storage accelerators based on the addresses of the short block read requests. The host accumulates a number of the short block read requests that target the same storage accelerator (e.g., target SSDs coupled with one storage accelerator). Accumulation of the short block read requests refers to temporarily storing the short block read requests until the desired number of short block read requests are received (e.g., in the example illustrated in FIG. 1 and FIG. 3, the host accumulates four short block read requests).

In 506, the host then provides a command to the storage accelerator that identifies the LBAs of the accumulated read requests and an address in host memory to transfer the accumulated data to. For example, referring to FIG. 1 and FIG. 3, the host device 102 places a command 300 in its I/O submission queue 110 and rings the doorbell to notify the storage accelerator 104 that the command has been placed in the queue 110. Ringing the doorbell in this context may refer to the host writing to a specific memory-mapped I/O (MMIO) register (e.g., a doorbell register) to notify the storage accelerator that a new command has been placed in the submission queue.

In 508, the host may receive an indication that the command is complete. For example, referring to FIG. 1, the accelerator may write a completion queue entry into the I/O completion queue 112. The host may monitor the completion queue 112 (e.g., via polling, an interrupt triggered by the storage accelerator 104, or through another mechanism).

In 510, in response to an indication that the command is complete, the host may access the accumulated data for the accumulated requests. For example, once the host determines that the short block data accumulation command is complete, the host may access the accumulated read data at the memory location that was indicated in the command (e.g., referring to FIG. 3, at the location indicated by the data pointer/PRP entry).

### Exemplary storage accelerator

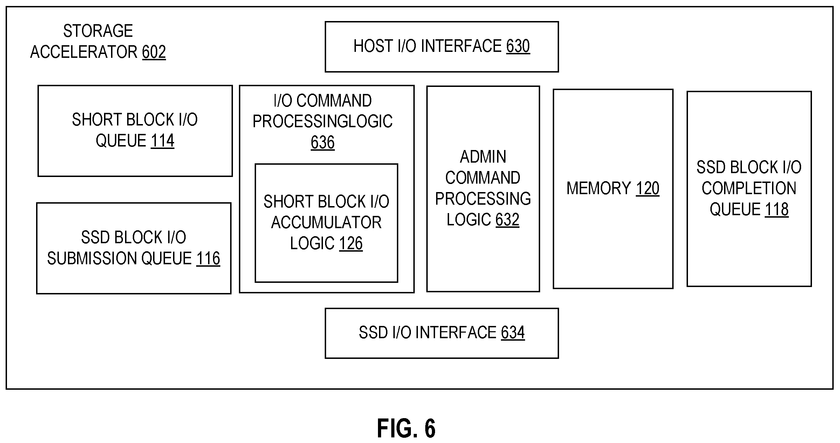

FIG. 6 illustrates an exemplary storage accelerator 602 in which short block data accumulation may be implemented. The storage accelerator 602 illustrated in FIG. 6 is an example of the storage accelerator 104 of FIG. 1. In addition to the components illustrated in FIG. 1, the storage accelerator 602 shown in FIG. 6 includes I/O interface circuitry 630 for interfacing with a requester (e.g., the host device 102 of FIG. 1 or another source of I/O commands) and I/O interface circuitry 634 for interfacing with SSDs (e.g., the SSDs 106-1, 106-2, 106-3, and 106-4 of FIG. 1). The I/O interface circuitry 630 and 634 serves as the communication pathway between the storage accelerator 602 and a host device and SSDs, respectively, facilitating data transfer and command processing operations. The interface circuitry typically includes a physical layer (PHY) that may implement standardized protocols such as SATA, PCle, or NVMe specifications, where the circuitry translates electrical signals from the host into internal commands that can be processed by the SSD controller.

In the example illustrated in FIG. 6, the storage accelerator 602 also includes admin command processing logic 632 to handle the processing of admin commands in addition to I/O command processing logic 636 to handle the processing of I/O commands. Examples of NVMe admin commands include the Identify command, the Create and Delete I/O Submission Queue commands, the Get Features command, the Set Features command, among others. The I/O command processing logic 636 handles the processing of I/O commands, including read commands, write commands, and short block data accumulation commands in accordance with examples described herein.

### Exemplary SSD

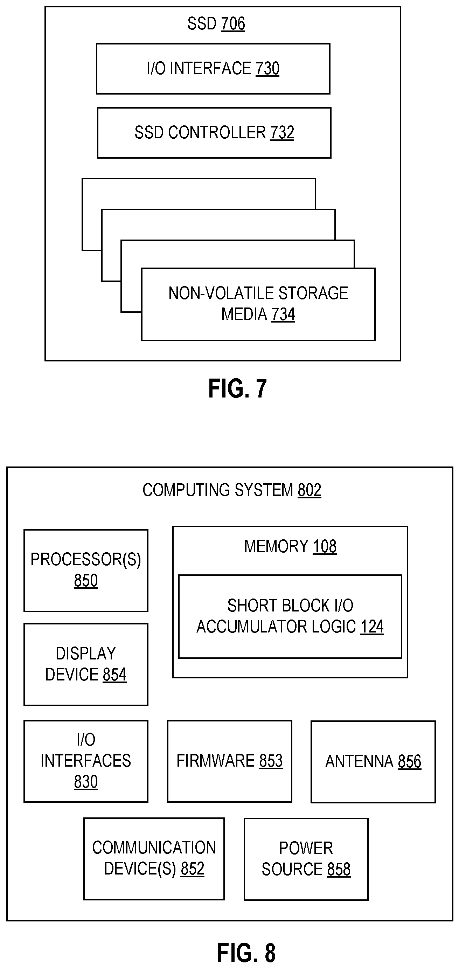

FIG. 7 illustrates an exemplary SSD 706, which may be included in a system implementing short block data accumulation. The SSD 706 includes I/O interface circuitry 730 for interfacing with a requester (e.g., the storage accelerator 104 of FIG. 4 or another source of I/O commands). The SSD 706 also includes an SSD controller 732. The SSD controller 732 manages storage operations in the SSD 706, including translation between logical block addresses from the host and physical storage locations through its firmware and translation layer. The SSD controller 732 may further handle wear leveling, garbage collection, error correction, bad block management, and/or other SSD management tasks. In some examples, the SSD 706 may include a DRAM cache (not shown in FIG. 7) to provide temporary high-speed storage for frequently accessed data, metadata, and mapping tables. Other SSDs may be DRAM-less. The SSD 706 includes non-volatile storage media 734, which may include NAND flash storage or other non-volatile storage media. In one example, the SSD 706 may include a plurality of NAND dies to provide the non-volatile storage media 734 of the SSD.

### Exemplary host device

FIG. 8 illustrates an exemplary computing system 802, which may represent a host device in which short block data accumulation may be implemented. The computing system 802 may be an example of the host device 102. In some examples, the computing system may be or include a system-on-a-chip (SoC) device. The computing system 802 may include one or more processors 850, such as CPUs, GPUs, digital signal processors (DSPs), microcontrollers, application-specific integrated circuits (ASICs), field-programmable gate arrays (FPGAs), network processors, audio processors, image processors, cryptographic processors, artificial intelligence accelerators, tensor processing units (TPUs), and/or other processors. The computing system includes memory 108, described above with respect to FIG. 1. The memory 108 may include short block I/O accumulator logic 124, which in some examples may be implemented in a storage driver 123.

The computing system 802 includes I/O interfaces 830 such as Universal Serial Bus (USB), Thunderbolt, Serial Advanced Technology Attachment (SATA), Peripheral Component Interconnect Express (PCIe), Non-Volatile Memory Express (NVMe), Compute Express Link (CXL), Serial Peripheral Interface (SPI), Inter-Integrated Circuit (I2C), Ethernet, wireless communication interfaces including Wi-Fi and Bluetooth, High-Definition Multimedia Interface (HDMI), DisplayPort, and various proprietary or industry-standard communication protocols for connecting peripheral devices, storage systems, and network components. The I/O interfaces 830 include an I/O interface to facilitate communication with a storage accelerator, such as the storage accelerator 602 of FIG. 6.

The computing system 802 includes firmware 853, which includes executable code stored in non-volatile memory that configures and controls hardware components during initialization and runtime operations of the system 802. The computing system 802 includes one or more power sources 858, which are components configured to provide electrical energy to support the operation of the computing system. Power sources 858 may include an alternating current (AC) power supply and a battery. The computing system 802 may include one or more antenna 856 configured to enable wireless communication with external devices or networks. The computing system 802 may include one or more communication devices 852 comprising wireless and wired communication components such as Wi-Fi transceivers, Bluetooth modules, cellular modems, Ethernet controllers, or radio frequency communication circuits for enabling data exchange with external devices, networks, and communication systems. The communication devices 852 may facilitate various communication protocols and standards for transmitting and receiving data across different network infrastructures and communication mediums. The computing system 802 may include a display device 854 comprising visual output components such as liquid crystal displays (LCD), light-emitting diode (LED) displays, or organic light-emitting diode (OLED) displays, for presenting graphical information, text, images, and user interface elements to a user.

The computing system 802 represents one example of a host device in which short block data accumulation may be implemented. Other host devices may include different or additional components than the computing system 802.

Thus, short block data accumulation techniques may enable optimization of the handling of small data requests. By aggregating multiple small data requests into a single command, short block data accumulation techniques may significantly reduce the number of commands processed, thereby enhancing system efficiency. Short block data accumulation techniques may also minimize command processing overhead, improve PCle bandwidth utilization, and maximize input/output operations per second (IOPs).

### Select examples

Example 1 provides a method implemented by a storage accelerator to enable handling of read requests for data having a size smaller than a block, the method including receiving, by the storage accelerator, a command from a requester (e.g., host), where: the command identifies multiple addresses (e.g., multiple LBAs) to read from and an address to transfer accumulated data to (e.g., descriptor/PRP), and the multiple addresses include a first address of a first storage device coupled with the storage accelerator and a second address of a second storage device coupled with the storage accelerator (e.g., at least two independent LBAs); and in response to the command: sending, to the first storage device, a first read command to read first data stored at the first address, sending, to the second storage device, a second read command to read second data stored at the second address, receiving the first data from the first storage device and the second data from the second storage device, storing accumulated data in a memory of the storage accelerator, where the accumulated data includes the first data and the second data, and causing the accumulated data to be transferred to a memory location (e.g., in host memory) indicated by the address from the command.

Example 2 provides the method of example 1, further including in response to the command: receiving a first completion from the first storage device to indicate the first read command is complete; receiving a second completion from the second storage device to indicate the second read command is complete; and in response to receipt of both the first completion and the second completion, sending a single completion to the requester.

Example 3 provides the method of any one of examples 1-2, where: the command is a vendor specific command.

Example 4 provides the method of any one of examples 1-3, where: the command includes the multiple addresses (e.g., LBAs are embedded in the command).

Example 5 provides the method of any one of examples 1-3, where the memory location is a first memory location, and where: the command includes a pointer to a second memory location where the multiple addresses are stored.

Example 6 provides the method of any one of examples 1-5, where: the command includes the address to transfer the data to (e.g., PRP is embedded in the command).

Example 7 provides the method of any one of examples 1-5, where the memory location is a first memory location, and where: the command includes a pointer to a second memory location where the address to transfer the data to (e.g., PRP) is stored.

Example 8 provides the method of any one of examples 1-7, where: the command identifies a namespace identifier and a drive identifier corresponding to each of the multiple addresses.

Example 9 provides the method of any one of examples 1-8, where: the multiple addresses include four logical block addresses, and each of the four logical block addresses maps to a different storage device coupled with the accelerator.

Example 10 provides the method of any one of examples 1-9, where: the accumulated data has a first size of the block (e.g., 512 B, 4 KB, or another standard block size), and the first data has a second size that is smaller than or equal to half the block.

Example 11 provides the method of any one of examples 1-10, where: storing the accumulated data in the memory of the storage accelerator includes storing the first data at a first offset from the address and storing the second data at a second offset from the address based on the command (e.g., based on the order of the LBAs in the command).

Example 12 provides an NVMe accelerator including first I/O circuitry to couple with a host; second I/O circuitry to couple with a plurality of storage devices, the plurality of storage devices including a first storage device and a second storage device; and logic (e.g., submission queue processing logic) to: receive a command from the host (e.g., from a host-side submission queue), where the command identifies multiple addresses (e.g., multiple LBAs) to read data from and an address to transfer the data to (e.g., descriptor/PRP), and where the multiple addresses include a first address of the first storage device and a second address of the second storage device, and in response to receipt of the command, provide read commands (e.g., by placement in an SSD-side submission queue) to two or more of the plurality of storage devices based on the command, including a first read command to the first storage device to read first data stored at the first address and a second read command to the second storage device to read second data stored at the second address; and a memory to store accumulated data based on the command, where: the accumulated data includes the first data and the second data, and the logic is to cause the accumulated data to be transferred from the memory to a host memory location indicated by the address from the command.

Example 13 provides the NVMe accelerator of example 12, where: the logic is to further, in response to the command: accumulate completions from the first storage device and the second storage device that indicate completion of the first read command and the second read command, and in response to receipt of the completions, sending a single completion to the host.

Example 14 provides the NVMe accelerator of any one of examples 12-13, where: the command is a vendor specific command.

Example 15 provides the method of any one of examples 12-14, where: the command includes the multiple addresses.

Example 16 provides the NVMe accelerator of any one of examples 12-14, where the host memory location is a first host memory location, and where: the command includes a pointer to a second host memory location where the multiple addresses are to be stored.

Example 17 provides the NVMe accelerator of any one of examples 12-16, where: the command includes the address to transfer the data to (e.g., PRP).

Example 18 provides the NVMe accelerator of any one of examples 12-16, where the host memory location is a first host memory location, and where: the command includes a pointer to a second memory location where the address to transfer the data to (e.g., PRP) is to be stored.

Example 19 provides the NVMe accelerator of any one of examples 12-18, where: the command identifies a namespace identifier and a drive identifier corresponding to each of the multiple addresses.

Example 20 provides the NVMe accelerator of any one of examples 12-19, where: the multiple addresses include four logical block addresses, and each of the four logical block addresses maps to a different storage device to be coupled with the NVMe accelerator.

Example 21 provides the NVMe accelerator of any one of examples 12-20, where: the accumulated data has a first size of a block (e.g., 512 B or 4 KB), and the first data has a second size that is smaller than or equal to half the block.

Example 22 provides the NVMe accelerator of any one of examples 12-21, where: to store the accumulated data in the memory, the logic is to: store the first data at a first offset from the address and store the second data at a second offset from the address based on the command (e.g., based on the order of the LBAs in the command).

Example 23 provides one or more non-transitory computer-readable media storing instructions (e.g., host-side storage driver) that, when executed by one or more processors, cause the one or more processors to perform a method to accumulate read requests for data having a size smaller than a block, the method including receive the read requests for data having the size smaller than the block; accumulate two or more of the read requests that target SSDs coupled with an accelerator, where the two or more requests include a first request to read first data stored at a first address on a first SSD and a second request to read second data stored at a second address of a second SSD; provide a command to the accelerator, where the command identifies the first address, the second address, and an address in host memory to transfer accumulated data to, where the accumulated data is to include the first data and the second data; receive an indication that the command is complete; and in response to the indication that the command is complete, access the accumulated data for the two or more requests at the address.

Example 24 provides the one or more non-transitory computer-readable media of example 23, where: the command is a vendor specific command.

Example 25 provides the one or more non-transitory computer-readable media of any one of examples 23-24, where: the command includes the multiple addresses.

Example 26 provides the one or more non-transitory computer-readable media of any one of examples 23-24, where: the command includes a pointer to a location in the host memory where the multiple addresses are stored.

Example 27 provides the one or more non-transitory computer-readable media of any one of examples 23-26, where: the command includes the address to transfer the data to (e.g., PRP).

Example 28 provides the one or more non-transitory computer-readable media of any one of examples 23-26, where: the command includes a pointer to a location in the host memory where the address to transfer the data to (e.g., PRP) is stored.

Example 29 provides the one or more non-transitory computer-readable media of any one of examples 23-28, where: the command identifies a namespace identifier and a drive identifier corresponding to each of the first address and the second address.

Example 30 provides the one or more non-transitory computer-readable media of any one of examples 23-29, where: the command identifies four logical block addresses including the first address and the second address, and each of the four logical block addresses maps to a different SSD coupled with the storage accelerator.

Example 31 provides the one or more non-transitory computer-readable media of any one of examples 23-30, where: the accumulated data has a first size of the block (e.g., 512 B or 4 KB), and the first data has a second size that is smaller than or equal to half the block.

Example 32 provides a system including a processor; an NVMe accelerator device coupled with the processor, where the NVMe accelerator device is configured to couple with a plurality of SSDs, where the NVMe accelerator device includes logic (e.g., submission queue processing logic) to: receive a command from the host (e.g., from a host-side submission queue), where the command identifies multiple addresses (e.g., multiple LBAs) to read data from and an address to transfer the data to (e.g., descriptor/PRP), and where the multiple addresses include a first address of the first storage device and a second address of the second storage device, in response to receipt of the command, provide read commands (e.g., by placement in an SSD-side submission queue) to two or more of the plurality of storage devices based on the command, including a first read command to the first storage device to read first data stored at the first address and a second read command to the second storage device to read second data stored at the second address; and a memory to store accumulated data based on the command, where: the accumulated data includes the first data and the second data, and the logic is to cause the accumulated data to be transferred from the memory to a host memory location indicated by the address from the command.

Example 33 provides the system of example 32, where: the NVMe accelerator device is in accordance of any one of claims 12-22.

Example 34 provides the system of any one of examples 32-33, further including a memory to store instructions, which when executed by one or more processors including the processor, cause the one or more processors to perform a method to handle read requests for data having a size smaller than a block in accordance with any one of claims 23-31.

Example 35 provides the system of any one of examples 32-34, further including the plurality of SSDs.

Example 36 provides a computer-readable storage medium storing an NVMe command to enable accumulating I/O requests to data having a size smaller than a block, where the I/O requests include a first read request, a second read request, a third read request, and a fourth read request, and where the NVMe command includes LBA information (e.g., either the actual address or a pointer to a location with the LBAs) to identify: a first LBA for the first read request from which first data is to be read, a second LBA for the second read request from which second data is to be read, a third LBA for the third read request from which third data is to be read, and a fourth LBA for the fourth read request from which fourth data is to be read; a drive identifier corresponding to each of the first read request, the second read request, the third read request, and the fourth read request, where the drive identifier identifies one of multiple SSDs coupled with a hardware accelerator; a namespace identifier corresponding to each of the first read request, the second read request, the third read request, and the fourth read request, where the namespace identifier identifies logical blocks of a target SSD of the multiple SSDs; and a pointer to a memory location to transfer accumulated data to, where the accumulated data is to include the first data, the second data, the third data, and the fourth data.

Example 37 provides the computer-readable storage medium of example 36, where: the command is an NVMe vendor specific command.

Example 38 provides the computer-readable storage medium of any one of examples 36-37, where the pointer is a first pointer, the memory location is a first memory location, and where: the LBA information includes a second pointer to a second memory location where the first LBA, the second LBA, the third LBA, and the fourth LBA are to be stored.

Example 39 provides the computer-readable storage medium of any one of examples 36-37, where: the LBA information includes the first LBA, the second LBA, the third LBA, and the fourth LBA in the command.

Example 40 provides the computer-readable storage medium of any one of examples 36-39, where: the accumulated data has a size of a block, and the first pointer is to a block-aligned location in host memory.

### Variations and other notes

The detailed description, such as the "Select examples" section, provide various examples of the embodiments disclosed herein.

As used herein, the term "coupled to" or "coupled with" refers to a relationship between electronic components or circuit elements wherein the components are in electronic communication with one another and capable of transmitting and/or receiving electrical signals between them. The term "coupled to" does not require a direct physical or electrical connection between the coupled components. Rather, "coupled to" can encompass arrangements where the components are connected through one or more intervening elements, components, circuits, or transmission paths. For example, a first component may be "coupled to" a second component through intermediate components such as resistors, capacitors, inductors, transistors, logic gates, buses, transformers, or other electronic components, or through intermediate transmission paths, while still maintaining the capability for electronic communication between the first and second components.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.
**The following is a list of further preferred embodiments of the invention:**
Embodiment 1. A method implemented by a storage accelerator to enable handling of read requests for data having a size smaller than a block, the method comprising:
   receiving, by the storage accelerator, a command from a requester, wherein:
   the command identifies multiple addresses to read from and an address to transfer accumulated data to, and
   the multiple addresses include a first address of a first storage device coupled with the storage accelerator and a second address of a second storage device coupled with the storage accelerator; and
   in response to the command:
      sending, to the first storage device, a first read command to read first data stored at the first address,
      sending, to the second storage device, a second read command to read second data stored at the second address,
      receiving the first data from the first storage device and the second data from the second storage device,
      storing the accumulated data in a memory of the storage accelerator, wherein the accumulated data includes the first data and the second data, and
      causing the accumulated data to be transferred to a memory location indicated by the address from the command.
Embodiment 2. The method of embodiment 1, further comprising:
   in response to the command:
   receiving a first completion from the first storage device to indicate the first read command is complete;
   receiving a second completion from the second storage device to indicate the second read command is complete; and
   in response to receipt of both the first completion and the second completion, sending a single completion to the requester.
Embodiment 3. The method of embodiment 1, wherein:
   the command is a vendor specific command.
Embodiment 4. The method of embodiment 1, wherein:
   the command includes the multiple addresses and drive identifiers corresponding to the multiple addresses.
Embodiment 5. The method of embodiment 1, wherein the memory location is a first memory location, and wherein:
   the command includes a pointer to a second memory location where the multiple addresses are stored.
Embodiment 6. The method of embodiment 1, wherein:
   the command includes the address to transfer the data to.
Embodiment 7. The method of embodiment 1, wherein the memory location is a first memory location, and wherein:
   the command includes a pointer to a second memory location where the address to transfer the data to is stored.
Embodiment 8. The method of embodiment 1, wherein:
   the command identifies: a namespace identifier, and a drive identifier corresponding to each of the multiple addresses.
Embodiment 9. The method of embodiment 1, wherein:
   the multiple addresses include four logical block addresses, and
   each of the four logical block addresses maps to a different storage device coupled with the storage accelerator.
Embodiment 10. The method of embodiment 1, wherein:
   the accumulated data has a first size of the block, and
   the first data has a second size that is smaller than or equal to half the block.
Embodiment 11. The method of embodiment 1, wherein:
   storing the accumulated data in the memory of the storage accelerator comprises storing the first data at a first offset from the address and storing the second data at a second offset from the address based on the command.
Embodiment 12. A non-volatile memory express (NVMe) accelerator comprising:
   first input/output (I/O) circuitry to couple with a host;
   second I/O circuitry to couple with a plurality of storage devices, the plurality of storage devices including a first storage device and a second storage device;
   logic to:
      receive a command from the host, wherein the command identifies multiple addresses to read data from and an address to transfer the data to, and wherein the multiple addresses include a first address of the first storage device and a second address of the second storage device, and
      in response to receipt of the command, provide read commands to two or more of the plurality of storage devices based on the command, including a first read command to the first storage device to read first data stored at the first address and a second read command to the second storage device to read second data stored at the second address; and
      a memory to store accumulated data based on the command, wherein:
         the accumulated data includes the first data and the second data, and
         the logic is to cause the accumulated data to be transferred from the memory to a host memory location indicated by the address from the command.
Embodiment 13. The NVMe accelerator of embodiment 12, wherein:
   the logic is to further, in response to the command:
   accumulate completions from the first storage device and the second storage device that indicate completion of the first read command and the second read command, and
   in response to receipt of the completions, sending a single completion to the host.
Embodiment 14. The NVMe accelerator of embodiment 12, wherein:
   the command is a vendor specific command, and
   the command identifies: a namespace identifier, and a drive identifier corresponding to each of the multiple addresses.
Embodiment 15. The NVMe accelerator of embodiment 12, wherein:
   the multiple addresses include four logical block addresses, and
   each of the four logical block addresses maps to a different storage device to be coupled with the NVMe accelerator.
Embodiment 16. The NVMe accelerator of embodiment 12, wherein:
   to store the accumulated data in the memory, the logic is to:
   store the first data at a first offset from the address and store the second data at a second offset from the address based on the command.
Embodiment 17. One or more non-transitory computer-readable media storing instructions that, when executed by one or more processors, cause the one or more processors to perform a method to enable handling of read requests for data having a size smaller than a block, the method comprising:
   receive the read requests for the data having the size smaller than the block;
   accumulate two or more of the read requests that target solid-state drives (SSDs) coupled with a storage accelerator, wherein the two or more read requests include a first request to read first data stored at a first address on a first SSD and a second request to read second data stored at a second address of a second SSD;
   provide a command to the storage accelerator, wherein the command identifies the first address, the second address, and an address in host memory to transfer accumulated data to, wherein the accumulated data is to include the first data and the second data;
   receive an indication that the command is complete; and
   in response to the indication that the command is complete, access the accumulated data for the two or more read requests at the address.
Embodiment 18. The one or more non-transitory computer-readable media of embodiment 17, wherein:
   the command is a vendor specific command, and
   the command identifies: a namespace identifier, and a drive identifier corresponding to each of the first address and the second address.
Embodiment 19. The one or more non-transitory computer-readable media of embodiment 17, wherein:
   the command identifies four logical block addresses including the first address and the second address, and
   each of the four logical block addresses maps to a different SSD coupled with the storage accelerator.
Embodiment 20. The one or more non-transitory computer-readable media of embodiment 17, wherein:
   the accumulated data has a first size of the block, and
   the first data has a second size that is smaller than or equal to half the block.

## Claims

1. A method implemented by a storage accelerator to enable handling of read requests for data having a size smaller than a block, the method comprising:
receiving, by the storage accelerator, a command from a requester, wherein:
the command identifies multiple addresses to read from and an address to transfer accumulated data to, and
the multiple addresses include a first address of a first storage device coupled with the storage accelerator and a second address of a second storage device coupled with the storage accelerator; and
in response to the command:
sending, to the first storage device, a first read command to read first data stored at the first address,
sending, to the second storage device, a second read command to read second data stored at the second address,
receiving the first data from the first storage device and the second data from the second storage device,
storing the accumulated data in a memory of the storage accelerator, wherein the accumulated data includes the first data and the second data, and
causing the accumulated data to be transferred to a memory location indicated by the address from the command.

2. The method of claim 1, further comprising:
in response to the command:
receiving a first completion from the first storage device to indicate the first read command is complete;
receiving a second completion from the second storage device to indicate the second read command is complete; and
in response to receipt of both the first completion and the second completion, sending a single completion to the requester.

3. The method of claim 1 or 2, wherein:
the command is a vendor specific command.

4. The method of one of claims 1 to 3, wherein:
the command includes the multiple addresses and drive identifiers corresponding to the multiple addresses.

5. The method of one of claims 1 to 4, wherein the memory location is a first memory location, and wherein:
the command includes a pointer to a second memory location where the multiple addresses are stored.

6. The method of one of claims 1 to 5, wherein:
the command includes the address to transfer the data to.

7. The method of one of claims 1 to 6, wherein the memory location is a first memory location, and wherein:
the command includes a pointer to a second memory location where the address to transfer the data to is stored.

8. The method of one of claims 1 to 7, wherein:
the command identifies: a namespace identifier, and a drive identifier corresponding to each of the multiple addresses.

9. The method of one of claims 1 to 8, wherein:
the multiple addresses include four logical block addresses, and
each of the four logical block addresses maps to a different storage device coupled with the storage accelerator; or
wherein:
the accumulated data has a first size of the block, and
the first data has a second size that is smaller than or equal to half the block.

10. The method of one of claims 1 to 9, wherein:
storing the accumulated data in the memory of the storage accelerator comprises storing the first data at a first offset from the address and storing the second data at a second offset from the address based on the command.

11. A non-volatile memory express (NVMe) accelerator comprising:
first input/output (I/O) circuitry to couple with a host;
second I/O circuitry to couple with a plurality of storage devices, the plurality of storage devices including a first storage device and a second storage device;
logic to:
receive a command from the host, wherein the command identifies multiple addresses to read data from and an address to transfer the data to, and wherein the multiple addresses include a first address of the first storage device and a second address of the second storage device, and
in response to receipt of the command, provide read commands to two or more of the plurality of storage devices based on the command, including a first read command to the first storage device to read first data stored at the first address and a second read command to the second storage device to read second data stored at the second address; and
a memory to store accumulated data based on the command, wherein:
the accumulated data includes the first data and the second data, and
the logic is to cause the accumulated data to be transferred from the memory to a host memory location indicated by the address from the command.

12. The NVMe accelerator of claim 11, wherein:
the logic is to further, in response to the command:
accumulate completions from the first storage device and the second storage device that indicate completion of the first read command and the second read command, and
in response to receipt of the completions, sending a single completion to the host.

13. The NVMe accelerator of claim 11 or 12, wherein:
the command is a vendor specific command, and
the command identifies: a namespace identifier, and a drive identifier corresponding to each of the multiple addresses; or
wherein:
the multiple addresses include four logical block addresses, and
each of the four logical block addresses maps to a different storage device to be coupled with the NVMe accelerator; or
wherein:
to store the accumulated data in the memory, the logic is to:
store the first data at a first offset from the address and store the second data at a second offset from the address based on the command.

14. One or more non-transitory computer-readable media storing instructions that, when executed by one or more processors, cause the one or more processors to perform a method to enable handling of read requests for data having a size smaller than a block, the method comprising:
receive the read requests for the data having the size smaller than the block;
accumulate two or more of the read requests that target solid-state drives (SSDs) coupled with a storage accelerator, wherein the two or more read requests include a first request to read first data stored at a first address on a first SSD and a second request to read second data stored at a second address of a second SSD;
provide a command to the storage accelerator, wherein the command identifies the first address, the second address, and an address in host memory to transfer accumulated data to, wherein the accumulated data is to include the first data and the second data;
receive an indication that the command is complete; and
in response to the indication that the command is complete, access the accumulated data for the two or more read requests at the address.

15. The one or more non-transitory computer-readable media of claim 14, wherein:
the command is a vendor specific command, and
the command identifies: a namespace identifier, and a drive identifier corresponding to each of the first address and the second address; or
wherein:
the command identifies four logical block addresses including the first address and the second address, and
each of the four logical block addresses maps to a different SSD coupled with the storage accelerator; or
wherein:
the accumulated data has a first size of the block, and
the first data has a second size that is smaller than or equal to half the block.
